# EUROPEAN PATENT SPECIFICATION

(11) **EP 2 981 704 B1**
(45) Date of publication and mention of the grant of the patent: **26.12.2018**
(21) Application number: 13880745.8
(22) Date of filing: 05.04.2013
(51) Int. Cl.: F03B 13/18

(54) **ARRANGEMENT FOR CONTROLLING WATER FLOW AT EDGE OF RECIPROCATING PANEL ELEMENT OF A WAVE ENERGY RECOVERY UNIT**
ANORDNUNG ZUR STEUERUNG DES WASSERFLUSSES AN DER KANTE EINES BEWEGLICHEN PLATTENELEMENTS AUS EINER WELLENENERGIEGEWINNUNGSEINHEIT
AGENCEMENT POUR COMMANDER UN FLUX D'EAU AU NIVEAU D'UN BORD D'UN ÉLÉMENT DE PANNEAU EFFECTUANT UN MOUVEMENT DE VA-ET-VIENT D'UNE UNITÉ DE RÉCUPÉRATION D'ÉNERGIE DES VAGUES

(43) Date of publication of application: 10.02.2016
(73) Proprietor: AW-Energy Oy, 01730 Vantaa (FI)
(72) Inventor: JÄRVINEN, Arvo, FI-01230 Vantaa (FI); BERG, Markus, FI-00780 Helsinki (FI)
(74) Representative: Salomäki, Juha Kari Ensio
(86) International application number: PCT/FI2013/050379
(87) International publication number: WO 2014/162038

(56) References cited:
- WO-A1-2004/110859
- WO-A1-2011/079199
- WO-A1-2012/022824
- WO-A2-2010/049708
- JP-A- H04 358 769
- US-A1- 2004 007 881

## Description

The present invention relates to a wave energy recovery unit as defined in the preamble of claim 1.

The wave energy recovery unit according to the invention comprises a control arrangement, which is suited very well for instance to be used in connection with an apparatus having a plate like panel or wing hinged with its lower edge to make a reciprocating movement caused by wave energy or tidal energy of seawater. The wave energy or tidal energy collected by the apparatus is further converted with a wave energy converter system for instance to electric energy and/or fresh water, hydrogen, pressurized water, pressurized air or chemicals. For the sake of simplicity, only the term wave energy is later mentioned and then both the wave energy and the tidal energy of seawater is meant.

According to the prior art there are various types of wave energy recovery systems where the arrangements include a base and one or more panel elements of essentially plate type pivotally connected to the base to make a reciprocating or oscillating movement about a rotation axis in response to wave forces or tidal forces. The oscillating movement is then converted for example to electric energy with the help of a generator or alike.

Due to prevailing ocean conditions, which are very much fluctuating, the efficiency of the known wave energy recovery systems have been generally very poor. At least in three different situations, such as: a) in different tidal conditions, b) when the direction of waves changes, and c) both during calm ocean conditions and during stormy ocean conditions, it has been extremely difficult to adjust the known wave energy recovery systems to collect maximum wave energy. The known wave energy recovery systems have generally not handled well these kinds of extreme conditions and therefore the total efficiency has been so low.

A wave energy recovery system of the prior art shown in WO2006100436A1 describes various panel constructions that all are fixed with their height and width, the also the edges of the panels are fixed with their structure. That kind of system is not adjustable according to prevailing ocean conditions. For instance, if the direction or strength of waves changes nothing can be done to adjust or improve the efficiency of the wave energy recovery. The same applies with different tidal conditions.

A wave energy recovery system of the prior art shown in international patent publication No. WO2011079199A1 describes a wave energy recovery unit comprising a reciprocating panel with adjustable water flow adjustment means at three edges of the panel. However, the solution of the present invention differs from this solution as is described later in this application.

The object of the present invention is to eliminate the drawbacks described above and to achieve a wave energy recovery unit, which comprises a reliable, flexible and efficient arrangement for controlling water flow at an edge of a reciprocating panel element of the wave energy recovery unit in order to be able to capture a maximum amount of available wave or tidal energy. Likewise, the object of the present invention is to achieve an arrangement that is flexible against various ocean conditions. The arrangement for controlling water flow at an edge of a reciprocating panel element of a wave energy recovery unit according to the invention is characterized by what is presented in the characterization part of claim 1. Other embodiments of the invention are characterized by what is presented in the other claims.

The solution of the invention has the advantage that thanks to the advanced arrangement the wave recovery unit according to the invention is very adaptable and it can easily be adjusted to collect a maximum amount of wave energy regardless of changing ocean condition. It can also learn best possible settings after its installation and adjust itself to collect a maximum amount of wave energy that is possible just at this installation site. A further advantage is a fast, easy and reliable installation of the arrangement. Yet a further advantage is a controlled ability to protect the apparatus against stormy sea conditions.

In the following, the invention will be described in detail by the aid of three examples by referring to the attached simplified and diagrammatic drawings, wherein
- Fig. 1: presents in an oblique top view a panel element of a wave energy recovery unit according to the invention in an upright position and a water flow adjustment means at the upper edge of the panel element in a lowermost position,
- Fig. 2: presents in an oblique top view the panel element according to Fig.1 in the situation where the water flow adjustment means at the upper edge of the panel element has been lifted upwards,
- Fig. 3: presents in an oblique top view another panel element of the wave energy recovery unit according to the invention, having water flow adjustment means at all the four edges of the panel element,
- Fig. 4: presents in an enlarged front view, cross-sectioned and in a simplified and diagrammatic way a detail at a corner of the panel element according to the invention,
- Fig. 5: presents in a side view and in a simplified and diagrammatic way the upper edge of the panel element according to the invention in the situation where the water flow adjustment means is in its lowermost position,
- Fig. 6: presents in a side view and in a simplified and diagrammatic way the upper edge of the panel element according to the invention in the situation where the water flow adjustment means has been lifted upwards,
- Fig. 7: presents in a side view and in a simplified and diagrammatic way the upper edge of the panel element according to the invention in the situation where a two-part water flow adjustment means is in its lower-most position,
- Fig. 8: presents in a side view and in a simplified and diagrammatic way the upper edge of the panel element according to the invention in the situation where one part of the two-part water flow adjustment means according to Fig. 7 has been lifted upwards,
- Fig. 9: presents in a side view and in a simplified and diagrammatic way the upper edge of the panel element according to the invention in the situation where another type of the water flow adjustment means is in its lowermost position,
- Fig. 10: presents in a side view and in a simplified and diagrammatic way the upper edge of the panel element according to the invention in the situation where the water flow adjustment means according to Fig. 9 has been lifted upwards,
- Fig. 11: presents in a side view and in a simplified and diagrammatic way the upper edge of the panel element according to the invention in the situation where yet another type of the water flow adjustment means is in its lowermost position,
- Fig. 12: presents in a side view and in a simplified and diagrammatic way the upper edge of the panel element according to the invention in the situation where the water flow adjustment means according to Fig. 11 has been turned upwards,
- Fig. 13: presents in a top view and in a simplified and diagrammatic way the panel element according to the invention in various situations where yet another type of the water flow adjustment means is in different positions at the side edges of the panel element,
- Fig. 14: presents in a side view and in a simplified and diagrammatic way the upper edge of the panel element according to the invention in the situation where yet another type of the water flow adjustment means is in its lowermost position,
- Fig. 15: presents in a side view and in a simplified and diagrammatic way the upper edge of the panel element according to the invention in the situation where the water flow adjustment means according to Fig. 14 has been lifted upwards,
- Fig. 16: presents in a side view and in a simplified and diagrammatic way the upper edge of the panel element according to the invention in the situation where water flow has turned the panel and the water flow adjustment means according to Fig. 14 to the left,
- Fig. 17: presents in a side view and in a simplified and diagrammatic way the upper edge of the panel element according to the invention in the situation where water flow has turned the panel and the water flow adjustment means according to Fig. 14 to the right and
- Fig. 18: presents in a top view and in a simplified and diagrammatic way the panel element according to the invention turned into three different positions around its vertical axis.

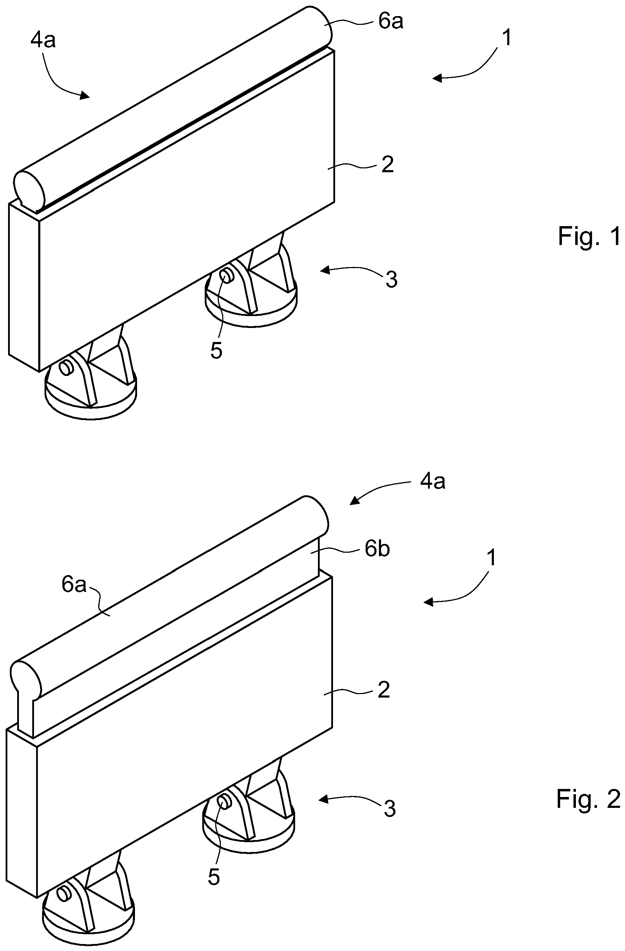

In Figs. 1 and 2 a panel element 2 of a wave energy recovery unit 1 according to the invention equipped with a water flow adjustment means 4a is shown in an upright position. In Fig. 1 the water flow adjustment means 4a at the upper edge of the panel element 2 is in its lowermost position, and in Fig. 2 the water flow adjustment means 4a has been lifted linearly upwards or moved linearly outwards from the edge of the panel element 2.

The wave energy recovery unit 1 according to the invention comprises at least a plate like panel element 2 that is hinged onto the base at the bottom of the sea with the help of support structures 3 and support shafts 5. Each wave energy recovery unit 1 comprises in addition at least recovering means or the power-take-of (PTO) means of the wave energy. The panel element 2 is arranged to make reciprocating motion caused by the kinetic energy of the waves, and the recovered energy is either saved into the energy storages situated inside the panel element 2 or transferred through the collecting means and cables or pipes to the use of the next unit that can be for instance a collecting station situated on shore. The fresh water produced by the wave energy recovery unit 1 can be stored in containers situated inside the panel element 2 of the wave energy recovery unit 1, and delivered time to time for further use. The panel element 2 can be hollow comprising one or more compartments that are sealed against seawater and that contain the devices and means needed to collect, convert and store the wave energy.

In order to be able to optimize the capture of the wave energy the water flow at the edge of the reciprocating panel element 2 has to be controlled. The controlling is performed with the water flow adjustment means 4a that is installed at the upper edge of the panel element 2 shown in Figs. 1 and 2. The water flow adjustment means 4a shown in Figs. 1 and 2 has an upper part 6a and a lower support part 6b that is for example inside the panel element 2 when the water flow adjustment means 4a is at its lowermost position.

The upper part 6a is about circular in its cross-section and the lower support part 6b is for example flat like a wall and narrower than the width of the upper part 6a. The flow pattern of the water flow around the upper edge of the panel element 2 is different when the water flow adjustment means 4a is in its lowermost position compared to its other positions. In a stormy weather the water flow adjustment means 4a should be kept in its lowermost position and in more peaceful weather the water flow adjustment means 4a can be lifted upwards.

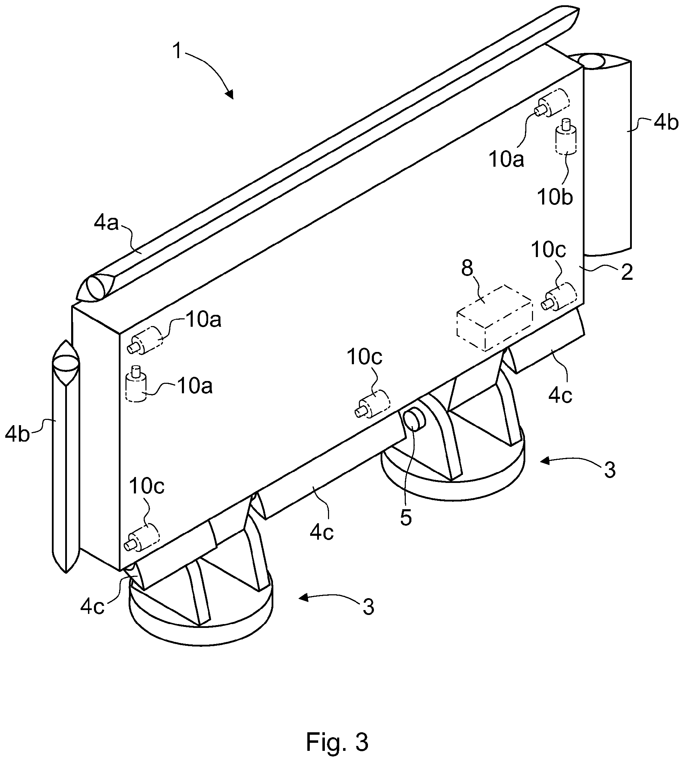

In Fig. 3 another wave energy recovery unit 1 according to the invention is presented in a simplified and diagrammatic way. In that case the wave energy recovery unit 1 comprises water flow adjustment means 4a, 4b, 4c at all the four edges of the panel element 2. The first water flow adjustment means 4a is at the upper edge of the panel element 2, the second water flow adjustment means 4b is at both side or end edges of the panel element 2, and three additional water flow adjustment means 4c are at the lower edge of the panel element 2. The wave energy recovery unit 1 comprises actuators 10a, for example electric motors, to move the water flow adjustment means 4a up and down at the upper edge of the panel element 2, and actuators 10b, for example electric motors, to move the water flow adjustment means 4b at the side edges of the panel element 2, and actuators 10c, for example electric motors, to move the water flow adjustment means 4c at the lower edge of the panel element 2. The actuators 10a - 10c are advantageously inside the panel element 2, and are controlled by a control unit 8 that is also inside the panel element 2. The control unit 8 is further connected to the control system of the wave energy recovery unit 1.

In this embodiment the water flow adjustment means 4a, 4b, 4c are essentially thin wing like elements having a rotating axis around which the water flow adjustment means 4a, 4b, 4c are rotated or turned so that water flow pattern can be adjusted at the edges of the panel element 2. In the cross-section the water flow adjustment means 4a, 4b, 4c the rotating axis, that is not presented in Fig. 3, can be at the front edge of the water flow adjustment means 4a, 4b, 4c or in the middle of the water flow adjustment means 4a, 4b, 4c like is imaginary shown in Fig. 3. In the case of Fig. 3 when the front edge or the first edge of the water flow adjustment means 4a, 4b, 4c is turned to the closest position with the panel element 2, the second edge of the water flow adjustment means 4a, 4b, 4c is turned to the furthermost position in relation to the panel element 2, and the surface area capturing the wave energy is at its largest position. However, the angle position of the water flow adjustment means 4a, 4b, 4c is downstream compared to the water flow direction and then the water flow passes the edges of the panel element 2 with a small resistance. The flow pattern at the edges of the panel element 2 is as effective as possible.

The biggest resistance and most turbulences exist in the same flow direction when the first edge of the water flow adjustment means 4a, 4b, 4c is turned to the furthermost position of the panel element 2 and the second edge of the water flow adjustment means 4a, 4b, 4c is turned to the closest position of the panel element 2. In this case the surface area capturing the wave energy is also at its largest position, but now the position of the water flow adjustment means 4a, 4b, 4c is such that at the edges of the panel element 2 the water flow adjustment means 4a, 4b, 4c resist the water flow as much as possible and change the flow pattern of the water flow.

The water flow adjustment means 4a, 4b, 4c can be turned also into several intermediate positions between the two extreme positions mentioned above. In these positions part of the water flow can pass the wave energy recovery unit 1 also between the edges of the panel element 2 and the water flow adjustment means 4a, 4b, 4c.

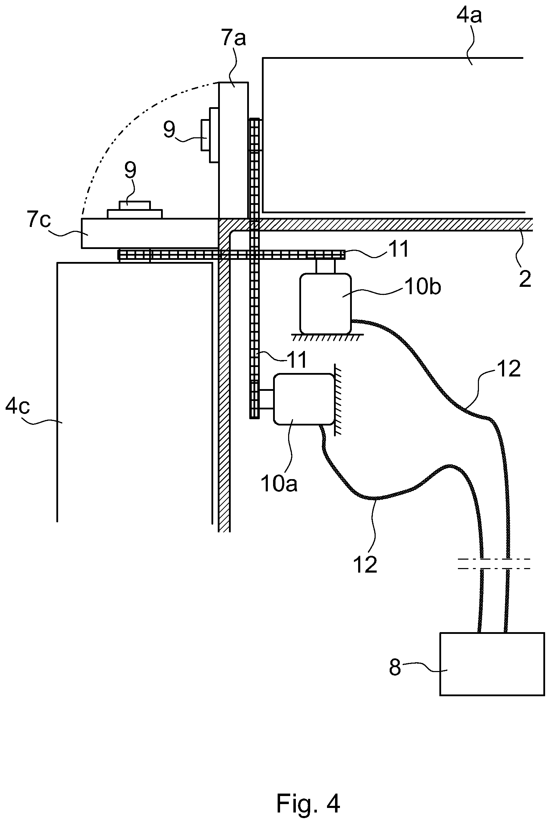

Fig. 4 presents in an enlarged front view, cross-sectioned and in a simplified and diagrammatic way a detail at a corner of the wave energy recovery unit 1 according to the invention. The corner is for example the upper left corner of the wave energy recovery unit 1 according to Fig. 3. The water flow adjustment means 4a at the upper edge of the panel element 2 has a rotating shaft 9 around which the water flow adjustment means 4a are rotated or turned. The rotating shaft 9 is mounted by the help of a bearing to a supporting flange 7a that is fastened to the upper left corner of the panel element 2. At the upper right corner of the panel element 2 the shaft 9, the flange 7a and the bearing are essentially similar. A chain wheel is mounted on the shaft 9 and the actuator 10a, such as an electric motor having also a chain wheel is installed inside the hollow panel element 2. The chain wheels of the shaft 9 and the electric motor 10a are connected with a chain 11 that moves the position of the water flow adjustment means 4a when the electric motor 10a is driven. The electric motor 10a is connected with cables 12 to the control unit 8 that gives orders when the water flow adjustment means 4a is to be moved, to which direction and how much at a time. The wave energy recovery unit 1 comprises essentially the corresponding means including a flange 7b, electric motor 10b, chain 11, shaft 9 and chain wheels also for the water flow adjustment means 4b at the side edges of the panel element 2, and also the corresponding means 9, 10c and 11 for the water flow adjustment means 4c at the lower edge of the panel element 2. The corner may have a cover over the ends of the shafts 9. The cover is represented in Fig. 4 with a dot-and-dash line.

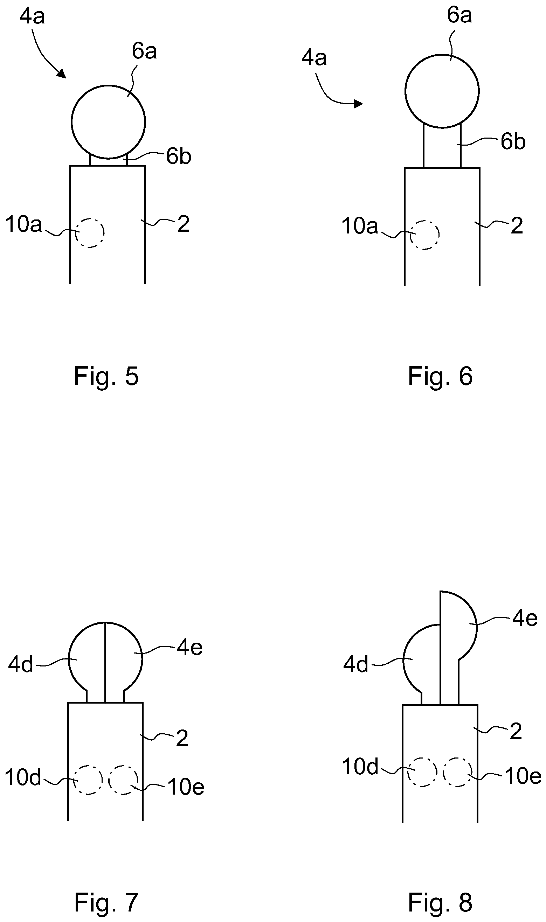

Figs. 5-12 present in a side view and in a simplified and diagrammatic way different upper edges of the panel element 2 of wave energy recovery units 1 according to the invention in the situations where the water flow adjustment means 4a, 4d, 4e are in different positions. Though Figs. 5-12 show the situations at the upper edge of the panel elements 2, the same applies to situations at all the edges of the panel elements 2.

Figs. 5 and 6 present the same structure and situation as Figs. 1 and 2. In Fig. 5 the water flow adjustment means 4a is in its lowermost position and in Fig. 6 the water flow adjustment means 4a has been lifted linearly upwards with the help of the electric motor 10a inside the panel element 2.

Figs. 7 and 8 present the structure where the water flow adjustment means 4a has been split vertically into two separate parts 4d and 4e that can be moved separately with electric motors 10d and 10e. In the situation of Fig. 7 the two separate parts 4d and 4e are in their lowermost position that corresponds the situation of Fig. 5. In Fig. 8 the first part 4d of the water flow adjustment means has been left at its lowermost position but the second part 4e of the water flow adjustment means has been lifted linearly upwards. Now the edge pattern differs from the edge patterns shown in Figs. 5-7 and the water flow meets different resistance than in the situations shown in Figs. 5-7 and the turbulence around the edges is different than in situations of Figs. 5-7.

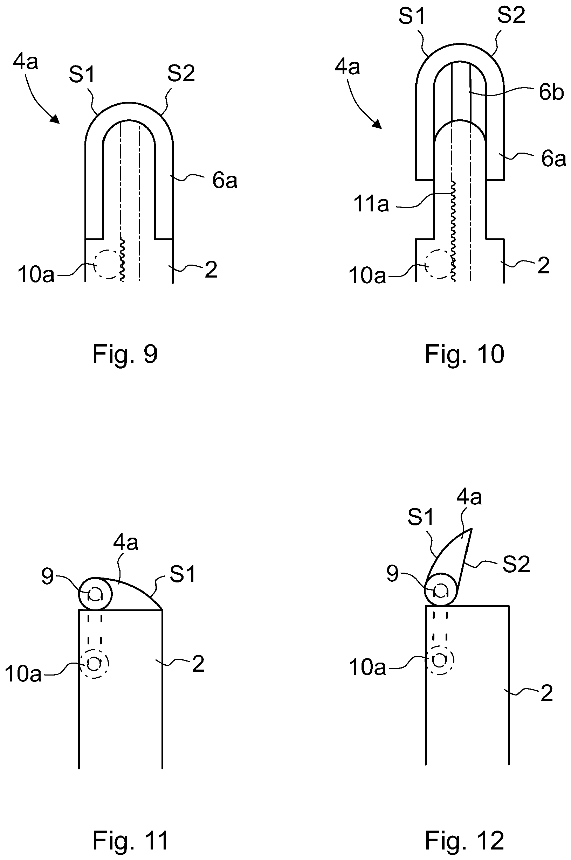

Figs. 9 and 10 present the structure where the water flow adjustment means 4a forms a curvilinear and streamlined first guide surface S1 on the first side of the water flow adjustment means 4a, and a similar guide surface S2 on the second side of the water flow adjustment means 4a. Both guide surfaces S1 and S2 guide the water flow running over the edge of the panel element 2 essentially softly and streamlined to pass the edge of the panel element 2. In Fig. 9 the water flow adjustment means has been left at its lowermost position, and in Fig. 10 the water flow adjustment means 4a has been lifted linearly upwards with the electric motor 10a. The support part 6b of the water flow adjustment means 4a is arranged to be inside the panel element 2 when the water flow adjustment means 4a is in its lowermost position, and to be moved upwards and downwards with the electric motor 10a and a gear rack 11a or alike.

Figs. 11 and 12 present a different type of the structure where the water flow adjustment means 4a also forms a curvilinear and streamlined first guide surface S1, and a straight and more resistive second surface S2. In Fig. 11 the water flow adjustment means 4a is turned to its lowermost position, and in Fig. 12 the water flow adjustment means 4a is turned to its uppermost position. The position of the water flow adjustment means 4a is changed for instance with the electric motor 10a and the chain 11 or alike. The rotating shaft 9 is situated at the first edge of the water flow adjustment means 4a. So, the position of the first edge of the water flow adjustment means 4a remains essentially unchanged when the second edge of the water flow adjustment means 4a ascending or descending. The water flow adjustment means 4a is arranged to be positioned steplessly in different angles between the lowermost position and the uppermost position.

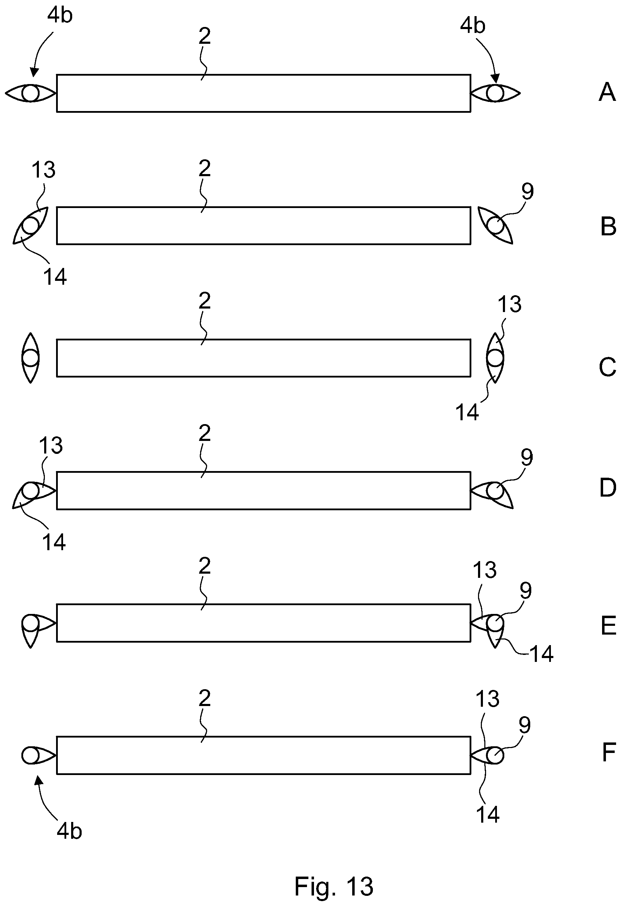

Fig. 13 presents in a top view and in a simplified and diagrammatic way a panel element 2 of the wave energy recovery unit 1 according to the invention in various situations where yet another type of the water flow adjustment means 4b is in different positions at the side edges of the panel element 2 of the wave energy recovery unit 1.

In Fig. 13A the water flow adjustment means 4b is in its extreme position where the inner wing part 13 of the means 4b and the outer wing part 14 of the means 4b are in the same straight line with the panel element 2, and then the surface area of the panel element 2 is at its largest and the water flow passes the edges that form a perpendicular barrier to the water flow. In this case the inner wing part 13 and the outer wing part 14 can be turned around their rotating shaft 9, but in Fig. 13A they are not rotated in relation to each other but are mutually in a straight line and mutually opposite to their rotating shaft 9.

In Fig. 13B and C the water flow adjustment means 4b is in a position where the inner wing part 13 and the outer wing part 14 are still mutually in a straight line with each other and mutually opposite to their rotating shaft 9 but in Fig. 13B the water flow adjustment means 4b are turned 45 degrees compared to the positions in Fig. 13A so that inner part 13 of both the wing parts 13, 14 is on the first side of the panel element 2 and the outer part 14 of both the wing parts 13, 14 is on the second side of the panel element 2, and there is a narrow cap between the side faces of the panel element 2 and the inner parts 13 of the water flow adjustment means 4b. Whereas in Fig. 13C the water flow adjustment means 4b are turned 90 degrees compared to the positions in Fig. 13A so that the inner wing part 13 of both the wing parts 13, 14 is on the first side of the panel element 2 and the outer wing part 14 of both the wing parts 13, 14 is on the second side of the panel element 2, and there is a larger cap between the side faces of the panel element 2 and the wing parts 13, 14 of water flow adjustment means 4b.

In Figs. 13 D - F the water flow adjustment means 4b is in a position where the inner wing part 13 and the outer wing part 14 are not mutually in a straight line in relation to each other. The position of the water flow adjustment means 4b in Fig. 13D is close to the corresponding position in Fig. 13A but now only the inner wing part 13 is in straight line with the panel element 2 and the outer wing part 14 is turned 45 degrees towards the second side of the panel element 2, and is so turned the same 45 degrees from its position in Fig. 13A. In Fig. 13E the outer wing part 14 is turned 90 degrees from its position in Fig. 13A, whereas the inner wing element 13 is in the same position as in Fig. 13A. And finally in Fig. 13F the outer wing part 14 is turned 180 degrees from its position in Fig. 13A, whereas the inner wing element 13 is in the same position as in Fig. 13A. Though the water flow adjustment means 4b have been presented here only in both side faces of the panel element 2, it is, however, clear that the same kind of structures can be arranged at all the edges of the panel element 2. And it is also obvious that the wing parts 13, 14 can be separately turned also in other angles than presented above. It is natural that all these different positions cause different flow patterns that affect in different ways to the water flow passing the edges of the panel element 2.

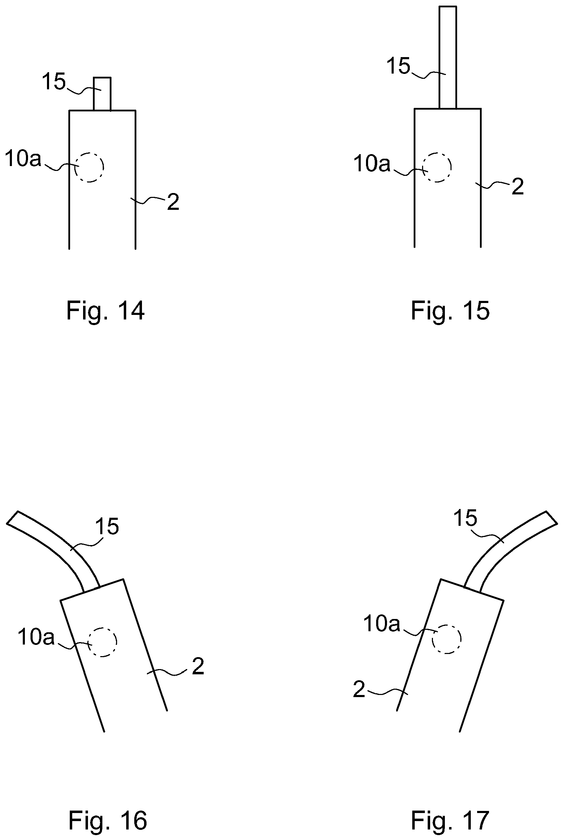

In Figs. 14 - 17 yet another panel element 2 of the wave energy recovery unit 1 according to the invention is presented in a side view and in a simplified and diagrammatic way. In Fig. 14 a flexible water flow adjustment means 15 of the panel element 2 is in its lowermost or innermost position at the upper edge of the panel element 2 according to the invention. Here the structure is described only at the upper edge of the panel element 2, but it can as well be similar at all the edges of the panel element 2. The electric motor 10a and the chain 11 or alike inside the panel element 2 are arranged to move the flexible water flow adjustment means 15 linearly outwards from the inner part of the panel element 2 and linearly inwards to the inner part of the panel element 2. In Fig. 15 the flexible water flow adjustment means 15 of the panel element 2 is in its uppermost or outermost position at the upper edge of the panel element 2. In this situation the wave energy recovery panel 1 is not in a working situation and water flow is not affecting to the panel element 2.

Figs. 16 and 17 present a working situation where the panel element 2 of the wave energy recovery unit 1 is reciprocating along water flow caused by the wave energy. In Fig. 16 the water flow has turned the panel element 2 to the left and the flexible water flow adjustment means 15 has followed the panel element 2 and bent at its upper end more left in the direction of the prevailing water flow. In Fig. 17 the same has happened towards right. When bending in the direction of the prevailing water flow the flexible water flow adjustment means 15 yields in front of the water flow and makes the passing of the water flow softer and more streamlined at the edges of the panel element 2.

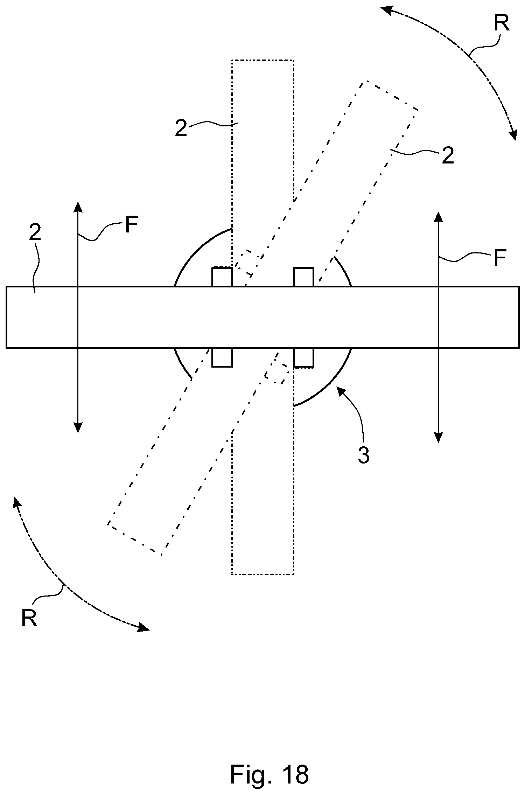

Fig. 18 presents in a top view and in a simplified and diagrammatic way a panel element 2 of the wave energy recovery unit 1 according to the invention turned into three different positions around its vertical central axis. The panel element 2 is presented in a position perpendicular to the water flow F by a continuous line. In this position the resistance against the water flow F is in its greatest. The second position in Fig. 18 represents the position where the panel element 2 is rotated 45 degrees counterclockwise in the direction of arrows R, and the third position in Fig. 18 represents the position where the panel element 2 is rotated 90 degrees counterclockwise in the direction of arrows R. The two latter positions are presented by dotted lines.

The panel element 2 is rotated in the direction of arrows R to any suitable angle between 0 and 90 degrees depending on the wanted effect. If, for instance, the power of waves is occasionally too big the panel element 2 can be rotated to the second or third position mentioned above in order to make the effect of the power of the waves smaller. Or, if more capturing is wanted and the direction of the water flow is not optimal towards the panel element 2, the panel element 2 can be rotated towards the water flow so that the effect of the water flow towards the panel element 2 increases.

The water flow adjustment means 4a, 4b, 4c have been arranged to one or more edges of the panel element 2 of the wave energy recovery unit 1 according to the invention to adjust the water flow passing the edges of the panel element 2 in order to optimize, improve or reduce the capture of the wave energy depending on the prevailing ocean conditions. The adjustment is made by changing the position of the water flow adjustment means 4a, 4b, 4c at the edges of the panel element 2. The position is changed either by changing the angle of the water flow adjustment means 4a, 4b, 4c or their reach from the edge of the panel element 2, or both. Also the cross-sectional forms of the water flow adjustment means 4a, 4b, 4c are changed.

The adjustment of the water flow is made also by changing the angle of the whole panel element 2 in relation to the prevailing flow direction of waves according to Fig. 18. In order to make the system reliable and working well the arrangement is equipped also with the control system of the wave energy recovery unit 1 as mentioned earlier. The control system is arranged to receive and analyze the prevailing ocean conditions and to give instructions to the control unit 8 to move the water flow adjustment means 4a, 4b, 4c in order to capture a maximum amount of wave energy in every weather condition. For that purpose the control system comprises means for observing the power and direction of waves, and for calculating as optimized as possible angles and positions for the panel element 2 and the water flow adjustment means 4a, 4b, 4c, and for changing the angles and positions of the panel element 2 and the water flow adjustment means 4a, 4b, 4c according the calculations mentioned above.

It is obvious to the person skilled in the art that the invention is not restricted to the example described above but that it may be varied within the scope of the claims presented below. Thus, for example, the structure of the wave energy recovery unit and its panel elements, and the water flow adjustment means can vary.

It is also obvious to the person skilled in the art that instead of electric motors the actuators changing the position and angle of the water flow adjustment means can also be for instance hydraulic motors or pneumatic motors.

## Claims

1. Wave energy recovery unit (1) equipped with at least a control system and a panel element (2) hinged onto a base at the bottom of the sea with the help of support structures (3) and support shafts (5), which wave energy recovery unit (1) comprises an arrangement for controlling water flow at an edge of the panel element (2), **characterized in that** the arrangement comprises adjustable water flow adjustment means (4a, 4b, 4c) at least at two or more edges of the panel element (2) and actuators (10a, 10b, 10c) for changing a position and/or angle of the water flow adjustment means (4a, 4b, 4c) separately from each other, which actuators (10a, 10b, 10c) are connected to a control unit (8), and the actuators (10a, 10b, 10c) and the control unit (8) are inside the panel element (2).

2. Wave energy recovery unit according to claim 1, **characterized in that** the actuators (10a, 10b, 10c) have been arranged to move the water flow adjustment means (4a, 4b, 4c) linearly outwards from the edge of the panel element (2) and linearly towards the edge of the panel element (2).

3. Wave energy recovery unit according to claim 1 or 2, **characterized in that** the water flow adjustment means (4a, 4b, 4c) are equipped with a rotating shaft (9) and the actuators (10a, 10b, 10c) have been arranged to rotate the water flow adjustment means (4a, 4b, 4c) at the edge of the panel element (2) around their rotating shafts (9).

4. Wave energy recovery unit according to claim 1, 2 or 3, **characterized in that** the upper part (6a) of the water flow adjustment means (4a, 4b, 4c) is symmetrical in its cross-section.

5. Wave energy recovery unit according to claim 1, 2 or 3, **characterized in that** the upper part (6a) of the water flow adjustment means (4a, 4b, 4c) is asymmetrical in its cross-section.

6. Wave energy recovery unit according to any of the claims above, **characterized in that** the water flow adjustment means (4a, 4b, 4c) are flexible and are arranged to bend in consequence of the water flow against the water flow adjustment means (4a, 4b, 4c).

7. Wave energy recovery unit according to any of the claims above, **characterized in that** the water flow adjustment means (4a, 4b, 4c) are at all the edges of the panel element (2).

8. Wave energy recovery unit according to any of the claims above, **characterized in that** the control unit (8) is connected to the control system of the wave energy recovery unit (1), which control system is arranged to receive and analyze the prevailing ocean conditions and to give instructions to the control unit (8) to move the water flow adjustment means (4a, 4b, 4c) in order to capture a maximum amount of wave energy in every weather condition.

9. Wave energy recovery unit according to any of the claims above, **characterized in that** the panel element (2) equipped with the water flow adjustment means (4a, 4b, 4c) at the edges of the panel element (2) is arranged to be rotated around its vertical central axis in order to capture a maximum amount of wave energy in every weather condition.

## Patentansprüche

1. Wellenenergie-Rückgewinnungseinheit (1), die mit mindestens einem Steuersystem und einem Plattenelement (2) ausgestattet ist, das mit Hilfe von Stützstrukturen (3) und Stützwellen (5) an einer Basis auf dem Meeresboden angelenkt ist, wobei die Wellenenergie-Rückgewinnungseinheit (1) eine Anordnung zum Steuern eines Wasserdurchflusses an einer Kante des Plattenelements (2) umfasst, **dadurch gekennzeichnet, dass** die Anordnung einstellbare Wasserströmung-Einstellungsmittel (4a, 4b, 4c) zumindest an zwei oder mehreren Kanten des Plattenelements (2) und Aktuatoren (10a, 10b, 10c) umfasst zum Ändern einer Position und/oder eines Winkels der Wasserströmung-Einstellungsmittel (4a, 4b, 4c) getrennt voneinander, wobei die Aktuatoren (10a, 10b, 10c) mit einer Steuereinheit (8) verbunden sind und sich die Aktuatoren (10a, 10b, 10c) und die Steuereinheit (8) innerhalb des Plattenelements (2) befinden.

2. Wellenenergie-Rückgewinnungseinheit gemäß Anspruch 1, **dadurch gekennzeichnet, dass** die Aktuatoren (10a, 10b, 10c) angeordnet worden sind, um die Wasserströmung-Einstellungsmittel (4a, 4b, 4c) linear nach außen von der Kante des Plattenelements (2) und linear in Richtung der Kante des Plattenelements (2) zu bewegen.

3. Wellenenergie-Rückgewinnungseinheit gemäß Anspruch 1 oder 2, **dadurch gekennzeichnet, dass** die Wasserströmung-Einstellungsmittel (4a, 4b, 4c) mit einer rotierenden Welle (9) ausgestattet sind und die Aktuatoren (10a, 10b, 10c) angeordnet worden sind, um die Wasserströmung-Einstellungsmittel (4a, 4b, 4c) an der Kante des Plattenelements (2) um ihre rotierenden Wellen (9) zu rotieren.

4. Wellenenergie-Rückgewinnungseinheit nach Anspruch 1, 2 oder 3, **dadurch gekennzeichnet, dass** der obere Teil (6a) der Wasserströmung-Einstellungsmittel (4a, 4b, 4c) symmetrisch in seinem Querschnitt ist.

5. Wellenenergie-Rückgewinnungseinheit gemäß Anspruch 1, 2 oder 3, **dadurch gekennzeichnet, dass** der obere Teil (6a) der Wasserströmung-Einstellungsmittel (4a, 4b, 4c) asymmetrisch in seinem Querschnitt ist.

6. Wellenenergie-Rückgewinnungseinheit gemäß irgendeinem der obigen Ansprüche, **dadurch gekennzeichnet, dass** die Wasserströmung-Einstellungsmittel (4a, 4b, 4c) flexibel sind und angeordnet sind, um sich infolge der Wasserströmung gegen die Wasserströmung-Einstellungsmittel (4a, 4b, 4c) zu biegen.

7. Wellenenergie-Rückgewinnungseinheit gemäß irgendeinem der obigen Ansprüche, **dadurch gekennzeichnet, dass** sich die Wasserströmung-Einstellungsmittel (4a, 4b, 4c) an allen Kanten des Plattenelements (2) befinden.

8. Wellenenergie-Rückgewinnungseinheit gemäß irgendeinem der obigen Ansprüche, **dadurch gekennzeichnet, dass** die Steuereinheit (8) mit dem Steuersystem der Wellenenergie-Rückgewinnungseinheit (1) verbunden ist, wobei das Steuersystem eingerichtet ist, um die vorherrschenden Meeresbedingungen zu empfangen und zu analysieren und an die Steuereinheit (8) Anweisungen zu geben, die Wasserströmung-Einstellungsmittel (4a, 4b, 4c) zu bewegen, um einen maximale Betrag an Wellenenergie in jeder Wetterlage zu erfassen.

9. Wellenenergie-Rückgewinnungseinheit gemäß irgendeinem der obigen Ansprüche, **dadurch gekennzeichnet, dass** das mit den Wasserströmung-Einstellungsmitteln (4a, 4b, 4c) an den Kanten des Plattenelements (2) ausgestattete Plattenelement (2) eingerichtet ist, um um seine vertikale Mittelachse gedreht zu werden, um einen maximale Betrag an Wellenenergie in jeder Wetterlage zu erfassen.

## Revendications

1. Unité de récupération d'énergie des vagues (1) équipée d'au moins un système de commande et d'un élément de panneau (2) articulé sur une base au fond de la mer à l'aide de structures de support (3) et d'arbres de support (5), laquelle unité de récupération d'énergie des vagues (1) comprend un agencement pour commander le flux d'eau au niveau d'un bord de l'élément de panneau (2), **caractérisée en ce que** l'agencement comprend des moyens de réglage de flux d'eau réglables (4a, 4b, 4c) au moins au niveau de deux bords ou plus de l'élément de panneau (2) et des actionneurs (10a, 10b, 10c) pour changer une position et/ou un angle des moyens de réglage de flux d'eau (4a, 4b, 4c) séparément les uns des autres, lesquels actionneurs (10a, 10b, 10c) sont reliés à une unité de commande (8), et les actionneurs (10a, 10b, 10c) et l'unité de commande (8) sont à l'intérieur de l'élément de panneau (2).

2. Unité de récupération d'énergie des vagues selon la revendication 1, **caractérisée en ce que** les actionneurs (10a, 10b, 10c) ont été agencés pour déplacer les moyens de réglage de flux d'eau (4a, 4b, 4c) linéairement vers l'extérieur à partir du bord de l'élément de panneau (2) et linéairement vers le bord de l'élément de panneau (2).

3. Unité de récupération d'énergie des vagues selon la revendication 1 ou 2, **caractérisée en ce que** les moyens de réglage de flux d'eau (4a, 4b, 4c) sont équipés d'un arbre rotatif (9) et les actionneurs (10a, 10b, 10c) ont été agencés pour faire tourner les moyens de réglage de flux d'eau (4a, 4b, 4c) au niveau du bord de l'élément de panneau (2) autour de leurs arbres rotatifs (9).

4. Unité de récupération d'énergie des vagues selon la revendication 1, 2 ou 3, **caractérisée en ce que** la partie supérieure (6a) des moyens de réglage de flux d'eau (4a, 4b, 4c) est symétrique dans sa section transversale.

5. Unité de récupération d'énergie des vagues selon la revendication 1, 2 ou 3, **caractérisée en ce que** la partie supérieure (6a) des moyens de réglage de flux d'eau (4a, 4b, 4c) est asymétrique dans sa section transversale.

6. Unité de récupération d'énergie des vagues selon l'une quelconque des revendications ci-dessus, **caractérisée en ce que** les moyens de réglage de flux d'eau (4a, 4b, 4c) sont souples et sont agencés pour fléchir suite au flux d'eau contre les moyens de réglage de flux d'eau (4a, 4b, 4c).

7. Unité de récupération d'énergie des vagues selon l'une quelconque des revendications ci-dessus, **caractérisée en ce que** les moyens de réglage de flux d'eau (4a, 4b, 4c) se trouvent au niveau de tous les bords de l'élément de panneau (2).

8. Unité de récupération d'énergie des vagues selon l'une quelconque des revendications ci-dessus, **caractérisée en ce que** l'unité de commande (8) est reliée au système de commande de l'unité de récupération d'énergie des vagues (1), lequel système de commande est agencé pour recevoir et analyser les conditions océaniques actuelles et pour donner des instructions à l'unité de commande (8) pour déplacer les moyens de réglage de flux d'eau (4a, 4b, 4c) afin de capturer une quantité maximale d'énergie des vagues dans toutes les conditions météorologiques.

9. Unité de récupération d'énergie des vagues selon l'une quelconque des revendications ci-dessus, **caractérisée en ce que** l'élément de panneau (2) équipé des moyens de réglage de flux d'eau (4a, 4b, 4c) au niveau des bords de l'élément de panneau (2) est agencé pour tourner autour de son axe central vertical afin de capturer une quantité maximale d'énergie des vagues dans toutes les conditions météorologiques.
